# EUROPÄISCHE PATENTSCHRIFT

(11) **EP 2 625 153 B1**
(45) Veröffentlichungstag und Bekanntmachung des Hinweises auf die Patenterteilung: **06.11.2019**
(21) Anmeldenummer: 11796912.1
(22) Anmeldetag: 06.10.2011
(51) Int. Cl.: C04B 35/653, C04B 35/111, C04B 35/109, C09K 3/14, B24D 3/00, B82Y 30/00

(54) **VERFAHREN ZUM HERSTELLEN VON ZIRKONIA-VERSTÄRKTEN ALUMINA-KÖRNERN**
METHOD FOR PRODUCING ZIRCONIA-REINFORCED ALUMINA GRAINS
PROCÉDÉ DE FABRICATION DE GRAINS D'ALUMINE RENFORCÉS À LA ZIRCONE

(30) Priorität: 06.10.2010 DE 102010047690
(43) Veröffentlichungstag der Anmeldung: 14.08.2013
(73) Patentinhaber: VSM. Vereinigte Schmirgel- Und Maschinen-Fabriken AG, 30165 Hannover (DE)
(72) Erfinder: FISCHER, Gerd, 30171 Hannover (DE); MEGERLE, Clemens, 30161 Hannover (DE); FALZ, Wolfgang, 30926 Seelze (DE)
(74) Vertreter: Bremer, Ulrich
(86) Internationale Anmeldenummer: PCT/DE2011/001804
(87) Internationale Veröffentlichungsnummer: WO 2012/045302

(56) Entgegenhaltungen:
- WO-A1-03/011776
- WO-A2-03/011782
- US-A1- 2004 148 967
- US-A1- 2005 065 013
- John Freim ET AL: "Development of novel microstructures in zirconia-toughened alumina using rapid solidification and shock compaction", JOURNAL OF MATERIALS RESEARCH, vol. 11, no. 01, 1 January 1996 (1996-01-01), pages 110-119, XP055370929, US ISSN: 0884-2914, DOI: 10.1557/JMR.1996.0014
- SARKAR ET AL: "Preparation and characterization of an Al2O3-ZrO2 nanocomposite, Part I: Powder synthesis and transformation behavior during fracture", COMPOSITES PART A: APPLIED SCIENCE AND MANUFACTURING, ELSEVIER, AMSTERDAM, NL, vol. 38, no. 1, 25 November 2006 (2006-11-25), pages 124-131, XP005780511, ISSN: 1359-835X, DOI: 10.1016/J.COMPOSITESA.2006.01.005
- Ke Zhao ET AL: "Development and property study of zirconia toughened nano-composite alumina ceramic powder for dental application", , 1 May 2003 (2003-05-01), XP055370907, Retrieved from the Internet: URL:http://en.cnki.com.cn/Article_en/CJFDT OTAL-ZHKY200305028.htm [retrieved on 2017-05-09]

## Beschreibung

Die Erfindung betrifft ein Verfahren zum Herstellen von polykristallinen Zirkonia-verstärkten Alumina-Körnern.

Zirkonia verstärktes Alumina wird auch als ZTA (Zirkonia toughened Alumina) bezeichnet und weist eine Matrix aus Alumina (Al2O3) mit Verstärkungen durch ZrO2-Ausscheidungen zur Erhöhung der Bruchfestigkeit und insbesondere des Selbstschärfvermögens auf.

In dem Zwei-Stoff-System Alumina (Al2O3) und Zirkonia (ZrO2) sind neben derartigen ZTA-Materialien unter anderem auch Zirkonia-Materialien mit zusätzlichem Alumina bekannt, die somit im Wesentlichen eine Zirkonia-Matrix aufweisen. Weiterhin sind Werkstoffe mit amorphen Phasen bzw. Glas-Phasen bekannt, die sich von den polykristallinen Materialien unterscheiden.

Polykristalline Alumina-Materialien können zum einen durch Pressen eines Grünlings mit anschließendem Sintern zur Keramik hergestellt werden. Weiterhin ist die Ausbildung polykristalliner Materialien aus einer Schmelze bekannt, z. B. aus der DE 26 53 034 A1. Das Aufschmelzen von Alumina erfordert hohe Temperaturen, wobei im Allgemeinen Temperaturen der Schmelze oberhalb 2.100 °C angestrebt werden. Gemäß der DE 26 53 034 A1 wird hierzu ein Higgins-Ofen eingesetzt, bei dem ein Lichtbogen-Ofen die erforderlichen Temperaturen erzeugt. Hierbei wird vorgeschlagen, die Schmelze nicht durch Kippen eines Tiegels zu entnehmen, sondern fortlaufend gekühlte, flaschenartige Körper durch das Schmelzbad zu fahren, damit sich Material der Schmelze durch schlagartiges Abkühlen an der Oberfläche der Körper niederschlägt und nachfolgend durch mechanische Einwirkung abgeschlagen werden kann. Hierbei wird auch beschrieben, eine eutektische Schmelze aus Al₂O₃ und ZrO₂ auszubilden

Derartige Lichtbogenöfen erfordern jedoch hohe Mengen an Energie. Um eine effektive Ausnutzung der Energie zu erreichen, werden im Allgemeinen große Chargen erhitzt. Die Herstellung erfolgt daher oftmals in Gebieten mit günstiger elektrischer Energie, z. B. aus Wasserkraft, oder unter Ausnutzung bestehender Kraftwerkskapazitäten in Zeiten geringeren Verbrauchs, z. B. nachts.

Die DE 699 17 490 T2 beschreibt ein weiteres Verfahren zum Herstellen von Alumina-Zirkonia-Schleifkörnern, bei dem ein Ausgangsmaterial durch einen Lichtbogen-Schmelzprozess aufgeschmolzen wird. Die US 3891408A und US2008/0028685A zeigen weitere Lichtbogen- Schmelzverfahren. Hierbei werden Chargen von einigen 100 kg des festen Ausgangsmaterials aufgeschmolzen und chargenweise entnommen. Bei derartigen Verfahren werden Abstände zwischen den Zirkonia- Ausscheidungen von z. B. etwa 4000 Angstrom (400 nm) erreicht.

Die Entnahme erfolgt bei Lichtbogen-Schmelzverfahren im Allgemeinen durch Unterbrechen des Lichtbogens und Entnahme der Schmelze durch z. B. Kippen, wenn nicht Maßnahmen wie in der oben genannten DE 26 53 034 A1 ergriffen werden.

Somit ist der Einsatz derartiger Technologien kostspielig. Zudem ist die Herstellung begrenzter Chargen, z. B. um spezifische Schleifmittel herzustellen, im Allgemeinen uneffektiv.

Die WO 2004/071975 A2 beschreibt die Herstellung von Schleifkörnern aus Glas-Keramik-Materialien mit einer Dreiecksform. Hierzu werden feste Ausgangsmaterialien mit Al₂O₃ und Zusätzen wie Seltenerd-Oxiden und Zir-Zirkonia aufgeschmolzen, und die Schmelze nachfolgend zwischen zwei gegenläufig rotierende Walzen eingebracht, durch die die Schleifkörner direkt mit der gewünschten Dreiecksform aus einem Glas-Keramik-Material ausgebildet werden.

Die Ausbildung von Schleifkörnern mit geeigneter Formgebung ist auch aus z. B. der EP 6 521 778 B1 bekannt, die ein Sol-Gel-Verfahren (Eindicken einer Suspension statt Aufschmelzen des Materials) beschreibt.

Die DE 15 19 747 C beschreibt ein Verfahren zum induktiven Aufschmelzen von Oxid-Keramiken mittels eines Induktions-Schmelzverfahrens. Zur Initiierung wird zunächst ein metallischer Hilfsstoff zugeführt, der die erforderliche Leitfähigkeit gewährleistet, bis ein Teil des Keramik-Materials aufgeschmolzen ist und die so entstandende Schmelze leitfähig ist. Das Material wird in einem Tiegel aufgeschmolzen und erstarrt nachfolgend.

Die WO 03/011782 A2 beschreibt ein Verfahren zur Ausbildung von Alumina-Zirkonia-Keramik-Materialien. Hierbei soll durch Abschrecken einer Schmelze eine hohe amorphe Phase von wenigstens 50 % erreicht werden. Das amorphe Material soll mit Dimensionen von mindestens 25 Mikrometern, vorzugsweise größer ausgebildet werden.

Festes Ausgangsmaterial kann durch Plasma oder in einem geheizten Tiegel, z. B. einem elektrisch geheizten Tiegel, gasbefeuerten oder induktiv geheizten Tiegel aufgeschmolzen werden und wird durch schnelles Abkühlen mit amorpher Phase ausgebildet.

Die US 2004/0148967 A1 beschreibt ein Verfahren zum Herstellen von Keramik-Teilen, bei denen eine flüssige Schmelze zur direkten Ausbildung geformter Schleifkörner eingesetzt wird, indem die Schmelze zwischen einer Walze und ein Band eingegeben wird, wobei in dem Band negative Abdrücke der herzustellenden, dreieckigen Keramik-Teile ausgebildet sind.

Die WO 03/011776 A1 beschreibt ein Verfahren zum Herstellen einer Vielzahl von Glas-Partikeln.

Der Erfindung liegt die Aufgabe zugrunde, ein Verfahren zum Herstellen von polykristallinen Zirkonia-verstärkten Alumina-Schleifkörnern zu schaffen, das eine relativ kostengünstige Herstellung mit gutem Materialeigenschaften ermöglicht.

Diese Aufgabe wird durch ein Verfahren nach Anspruch 1 gelöst. Die Unteransprüche beschreiben bevorzugte Weiterbildungen.

Erfindungsgemäß wird somit festes Ausgangsmaterial induktiv aufgeschmolzen, um eine eutektische Schmelze aus Aluminiumoxid und Zirkoniumdioxid auszubilden. Die eutektische Schmelze wird nachfolgend direkt als dünnes Schichtmaterial abgeschreckt.

Erfindungsgemäß wird unter einer eutektischen Schmelze aus Aluminiumoxid und Zirkoniumdioxid eine Schmelze verstanden, die in an sich bekannter Weise etwa 54 bis 61 Gew-% Al₂O₃ und entsprechend 39 bis 46 Gew-% ZrO₂ aufweist, wobei in an sich bekannter Weise ein kleinerer Teil des ZrO₂ auch durch das chemisch gleichwertige HfO2 ersetzt sein kann. Die eutektische Schmelze kann ggf. in an sich üblicher Weise Stabilisatoren oder Zusätze enthalten, z. B. Ceroxid, Seltenerd-Oxide oder Siliziumdioxid, so dass die Gewichtsbereiche von 54 bis 61 Gew-% Al₂O₃ und 39 bis 46 Gew-% ZrO₂ entsprechend verringert oder abgeändert sind. Relevant ist, dass eine eutektische Schmelze ausgebildet wird, die eine homogene Mischphase ausbildet, die den Bereich mit der tiefsten Erstarrungstemperatur des Alumina-Zirkonia-Systems aufweist.

Erfindungsgemäß wird somit eine relativ geringe Schmelztemperatur ermöglicht. Weiterhin zeigt sich, dass erfindungsgemäß durch Abschrecken aus dieser eutektischen Schmelze Schleifkörner aus polykristallinem Material mit sehr guten Eigenschaften ausgebildet werden können.

Das induktive Aufschmelzen erfolgt derartig, dass eine bestehende Schmelze induktiv geheizt wird, und festes Ausgangsmaterial dieser Schmelze zugeführt wird. Somit können die bei Beginn eines induktiven Aufschmelzvorgangs im Allgemeinen erforderlichen, initiierenden chemischen Reaktionen erfindungsgemäß im fortlaufenden Prozess vermieden werden. Festes Aluminamaterial bzw. Korundmaterial ist elektrisch nicht leitend und kann somit zunächst nicht induktiv geheizt werden; beim Anfahrvorgang kann daher - um ein Zuführen von Metall wie in der DE 15 19 747 C zu vermeiden - zunächst eine lokale Aufschmelzung durch z. B. eine chemische Redox-Reaktion vorgenommen werden, um eine Anfangsschmelze zu erzeugen. Bei Aufschmelzen einzelner Chargen in einem Tiegel, der nachfolgend z. B. durch Kippen entleert wird, kann somit wiederum ein neuer initiierender Aufschmelzvorgang erforderlich werden, was zu einem diskontinuierlichen und kostenträchtigeren Verfahren führt.

Erfindungsgemäß kann hingegen eine bestehende induktiv geheizte Schmelze durch fortlaufendes Zuführen des festen Ausgangsmaterials aufrechterhalten werden. Das geschmolzene Material kann aus dem Tiegel entnommen werden, ohne diesen vollständig zu leeren.

Vorteilhafterweise kann die Entnahme der Schmelze fortlaufend erfolgen, d. h. nicht diskontinuierlich wie durch Kippen eines Tiegels oder auch durch Einführen von Kühlkörpern in eine Schmelze. Die Schmelze kann erfindungsgemäß vielmehr in einem kontinuierlichen Ablassvorgang, z. B. aus einem geeigneten Auslass des Tiegels, z. B. als Überlauf, entnommen werden, um es direkt als dünnes Schichtmaterial abzuschrecken.

Bei Verwendung eines Überlaufs sind zudem keine relevanten Fördervorrichtungen erforderlich; die kontinuierliche Entnahme der Schmelze kann selbsttätig durch die kontinuierliche Zuführung des festen Ausgangsmaterials erfolgen.

Eine derartige kontinuierliche Entnahme ist z. B. bei Lichtbogenöfen während des Betriebs nicht möglich, da elektrischer Strom durch die Schmelze fließt und die Schmelze daher in einem isolierten Tiegel aufgenommen wird, bis der Strom abgeschaltet wird.

Somit ergibt sich durch die Verwendung eines induktiven Schmelzprozesses mit kontinuierlicher Zuführung von Ausgangsmaterial und Entnahme flüssiger Schmelze zur Ausbildung der keramischen Körner eine vorteilhafte synergistische Wirkung.

Da erfindungsgemäß eine induktive Heizung erfolgt, können anders als bei Lichtbogen-Öfen auch kleinere Mengen verarbeitet werden, so dass eine flexible Herstellung spezifischer Chargen ermöglicht wird. So können z. B. auch Chargen mit weniger als 100 kg, insbesondere weniger als 50 kg Material im Tiegel gefahren werden.

Somit können insbesondere bei kontinuierlicher Entnahme sehr geringe Mengen entnommen werden, bei denen hohe Abkühlgeschwindigkeiten erzielt werden können. Hierbei wird erkannt, dass derartige hohe Abkühlgeschwindigkeiten zu kleineren Segregationen von Zirkonia-Ausscheidungen in der Alumina-Matrix führen, weiterhin kann der Abstand zwischen den Zirkonia-Ausscheidungen verkleinert werden, z. B. auf kleiner 250 nm, insbesondere kleiner 200 nm. Durch die kleineren Abstände wird hierbei insbesondere auch das Selbstschärfvermögen und somit das Abrasivverhalten als Schleifmittel verbessert, da die Zirkonia-Ausscheidungen bei einem Schleifvorgang absprengen und die Ausbildung scharfer Kanten ermöglichen.

Die Temperaturgradienten, die zu einem derartig schnellen Abkühlen und den geringen Abständen zwischen den Zirkonia-Ausscheidungen führen, werden durch die Temperatur der Schmelze von z. B. 1.800 bis 2.000 °C, die Temperatur der aufnehmenden Wände und die Schichtdicke der ausgebildeten Schicht bestimmt.

Die Schichtdicke des Schichtmaterials kann kleiner 2 mm, vorzugsweise kleiner 1 mm, z. B. im Bereich 0,1 - 0,8 mm liegen, die somit direkt einer Schleifkorn-Dicke entspricht.

Somit ermöglicht das erfindungsgemäße Verfahren eine spezifische Ausbildung der Körner, die sich insbesondere für den Einsatz als Schleifkörner eignet.

Weiterhin führt die erfindungsgemäß mögliche Aufschmelzung geringerer Mengen dazu, dass eine geringere Warmhalteenergie erforderlich ist. Insbesondere bei der kontinuierlichen Zuführung von Material und der kontinuierlichen Entnahme der Schmelze kann nach der Funktionsweise eines "Durchlauferhitzers" die jeweils warm gehaltene Schmelzmenge sehr gering gehalten werden, wohingegen die chargenweisen Aufschmelz- und Entnahmevorgänge des Standes der Technik wie bei einem Speichererhitzer (Boiler) eine hohe Warmhalteenergie erfordern.

Ein weiterer Vorteil der induktiven Aufschmelzung liegt darin, dass anders als bei Lichtbogenverfahren, bei denen die Graphitelektroden zum Rühren in die Schmelze eingetaucht werden, kein Kontakt mit der Schmelze erforderlich ist und somit Verunreinigungen vermieden werden können.

Gemäß einer erfindungsgemäßen Ausbildung kann das erhaltene dünne Schichtmaterial eine großflächigere dünne Schicht sein, d.h. ein plattenartiges Schichtmaterial, das aufgrund der geringen Schichtdicke schnell auf dem Förderband erstarrt und nachfolgend entnommen werden kann, wobei es bereits bei der Entnahme großteils zerbrechen und ggf. nachfolgend mechanisch weiter zerkleinert werden kann, so dass es anschließend durch Klassieren in geeignete Schichtdicken-Bereiche unterteilt werden kann. Die geringe Schichtdicke ermöglicht ein augenblickliches Abschrecken auf dem Förderband.

Gemäß einer hierzu alternativen Ausbildung kann die Schmelze jedoch auch direkt zum Formen von Schleifkörnern verwendet werden, wie es als solches aus der WO 2004/071975 A2 bekannt ist. Das direkte Ausbilden flacher, kleiner Schleifkörner mit einer Dicke unterhalb 1 mm, insbesondere 0,1 bis 0,8 mm ermöglicht somit einen Abschreckvorgang, der erfindungsgemäß jedoch, anders als in der WO 2004/071975 A2, aus einer eutektischen Schmelze erfolgt und zur Ausbildung polykristalliner Schleifkörner dient.

Indem die Schmelze erfindungsgemäß fortlaufend zugeführt wird, kann ein sich oberhalb des Kontaktbereichs der beiden Walzen oder vor einer Abstreifeinrichtung des Förderbandes ausbildender Schmelzwulst, der zu einem langsameren Abkühlen des Schmelzmaterials und ggf. vorzeitigem Erstarren führen könnte, gering gehalten werden; es wird somit allenfalls ein linienförmiger oder punktförmiger Schmelzwulst ausgebildet.

Weiterhin wird erfindungsgemäß erkannt, dass der Einsatz der eutektischen Schmelze sowie der kontinuierliche Zuführvorgang besonders geeignet kombiniert werden können mit dem Einsatz einer heißen, z. B. auf 1.000 bis 1.600 °C geheizten und einer kalten, z.B. wassergekühlten Walze. Hierbei sind in der Oberfläche der kalten Walze Formvertiefungen für die Schleifkörner ausgebildet, so dass die eingegebene Schmelze eine Kühlung von der Unterseite und sämtlichen Seitenflächen erfährt, wodurch ein schneller Abschreckvorgang ermöglicht wird. Die heiße Walze weist hingegen eine glatte Oberfläche auf und dient der Formgebung der Oberfläche. Durch die heiße Walze kann in dem ohnehin bereits geringen Schmelzwulst die Abkühlung nochmals geringer gehalten werden, insbesondere bei einem linien- oder punktförmigen Schmelzwulstbereich.

Durch diese Kombination der eutektischen Schmelze, die eine niedrige Erstarrungstemperatur ermöglicht, mit der kontinuierlichen Schmelzzuführung und dieser Walzenanordnung wird eine besondere Kombination geeigneter Maßnahmen erreicht, die überraschenderweise zu Schleifkörnern mit ausgezeichneten Materialeigenschaften führt. Hierbei zeigt sich, dass die Segregation von Zirkonia in der Alumina-Matrix insbesondere in den Eckbereichen der geformten Schleifkörner zu kleinen Segregationen führt, insbesondere Nanoskalierungen unterhalb 100 nm, vorzugsweise unterhalb 50 nm. Diese Nanoskalierungen in den Eckbereichen sind auf den hier besonders schnell erfolgenden Abschreckvorgang einer eutektischen Schmelze zurückzuführen und führen zu einem sehr guten Abrasivverhalten, so dass gerade die mechanisch beanspruchten Eckbereiche exzellente Schleifeigenschaften aufweisen.

Anhand des erfindungsgemäßen Verfahrens werden somit Schleifmittel mit mehreren, aus einer Schmelze geformten Körnern mit im wesentlichen gleicher Form erhalten, die z. B. auf einem Träger mit Bindemittel aufgenommen sind.

Die Erfindung wird im Folgenden anhand der beiliegenden Zeichnungen an einigen Ausführungsformen erläutert. Es zeigen:
- Fig. 1: eine Darstellung des Herstellungsverfahrens gemäß einer ersten Ausführungsform zur Ausbildung von Schleifkörnern;
- Fig. 2: ein Diagramm des Herstellungsverfahrens gemäß einer weiteren Ausführungsform zur Herstellung geformter Schleifkörner;
- Fig. 3: eine Darstellung eines gemäß Fig. 2 hergestellten geformten Schleifkorns; und
- Fig. 4: eine REM-Aufnahme bzw. ein Schliffbild eines erfindungsgemäß hergestellten Schleifkorns in einem seiner Eckbereiche.

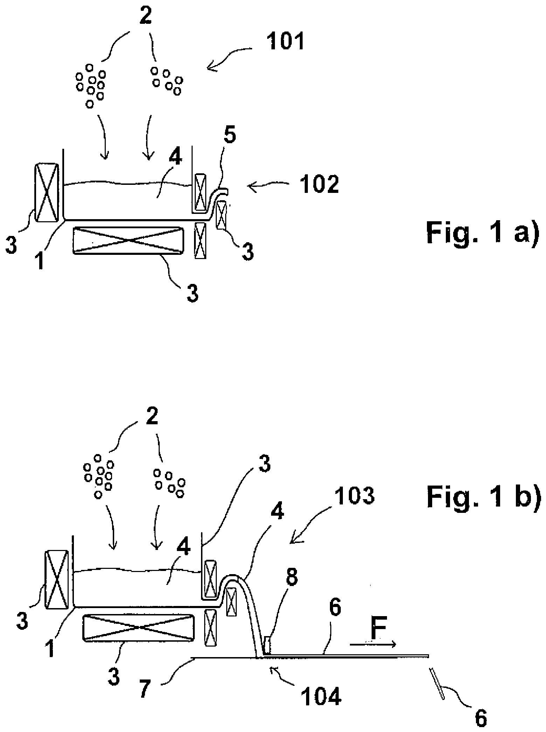

Fig. 1a) bis c) zeigen die aufeinander folgenden Herstellungsschritte eines Verfahrens gemäß einer ersten Ausführungsform. Gemäß Fig. 1a) wird in einen Tiegel 1 ein festes Ausgangs-Gemisch 2 eingegeben, das Al₂O₃ (Aluminiumoxid) oder Aluminiumoxid-Verbindungen sowie ZrO₂ (Zirkonia) oder Zirkoniaverbindungen, oder jeweils deren Vorstufen enthält.

Außerhalb des Tiegels 1 ist eine Induktions-Heizeinrichtung 3 angeordnet, so dass ein Induktionsofen gebildet wird. In dem Tiegel 1 ist eine eutektische Schmelze 4 aus Al2O3 und ZrO₂ aufgenommen, die elektrisch leitend ist und durch die Induktions-Heizeinrichtung 3 geheizt wird. Das in die Schmelze 4 eingegebene Ausgangsmaterial 2 wird somit vollständig induktiv aufgeschmolzen und vergrößert die Schmelze 4.

Eine anfängliche Aufschmelzung kann insbesondere durch eine chemische Redox-Reaktion zur Erzeugung einer hohen lokalen Temperatur erfolgen, ist dann im weiteren Dauerbetrieb nicht mehr erforderlich.

Die Schmelze 4 liegt in dem Phasendiagramm in dem eutektischen Bereich vor, sie ist im wesentlichen aus Al₂O₃ (α-Alumina) und ZrO₂ (Zirkonia) gebildet und liegt bei ca. 1.800 bis 2.000 °C geschmolzen vor, d.h. oberhalb der eutektischen Erstarrungstemperatur von ca. 1.700° C. Die eutektische Schmelze weist in an sich bekannter Weise etwa 54 bis 61 Gew-% Al₂O₃ und entsprechend 39 bis 46 Gew-% ZrO₂ auf. Hierbei können grundsätzlich weitere Stabilisatoren oder Zusätze zugefügt sein, insbesondere Seltenerdoxide wie Yttriumoxid Y₂O₃, z. B. bis zu 6 Gew.-% Y₂O₃, und/oder Ceroxid, und/oder Siliziumoxid und/oder weitere Substanzen. Weiterhin kann ein Teil des Zirkondioxides auch durch Hafniumdioxid ersetzt sein, das praktisch gleiche chemische Eigenschaften aufweist. Relevant ist, dass sich eine eutektische Schmelze aus Alumina und Zirkonia bildet, die als solche grundsätzlich bekannt ist.

Die Schmelze 4 wird gemäß Fig. 1b aus dem Tiegel 1 durch einen Auslass an einem Überlauf 5 abgelassen und bei dieser Ausführungsform als dünne Schicht 6 auf ein Förderband 7 aufgebracht, das fortlaufend in Förderrichtung F transportiert wird. Hierbei kann die Schmelze 4 z. B. durch eine Abstreif- Einrichtung 8 auf die Schichtdicke d abgestrichen werden. Die Schmelze 4 wird bei Kontakt mit dem Förderband 7 abgeschreckt, wobei das Förderband 7 temperiert sein kann, z. B. durch Wasserkühlung. Der Überlauf 5 kann ebenfalls durch die Induktions-Heizeinrichtung 3 geheizt werden, um hier ein vorzeitiges Erstarren der Schmelze 4 zu verhindern.

Die Schicht 6 hat z. B. eine Schichtdicke d von < 2 mm, insbesondere < 1 mm; sie kann vorzugsweise im Bereich von 0,1 bis 0,8 mm liegen und entspricht vorteilhafterweise bereits der Dicke der späteren Schleifkörner.

Die Zugabe des Ausgangsgemischs 2 kann kontinuierlich oder chargenweise erfolgen; die Entnahme der Schmelze 4 über den Überlauf 5 erfolgt vorteilhafterweise kontinuierlich und vorzugsweise selbsttätig, d.h. es fließt entsprechend dem zugeführten festen Ausgangsgemisch 2 jeweils Schmelze 4 ab, wobei der Überlauf 5 gegebenenfalls bei Bedarf gedrosselt oder gestoppt werden kann.

Die Abkühlung der dünnen Schicht 6 von der Temperatur der Schmelze von ca. 1.800 bis 2.000°C auf die Erstarrungstemperatur bei 1.700°C erfolgt aufgrund der relativ großen Oberfläche der dünnen Schicht 6 im Verhältnis zu ihrer Schichtdicke d sehr schnell bzw. augenblicklich, so dass ein sehr effektiver Abschreck-Prozess erreicht wird.

Aufgrund der fortlaufenden, kontinuierlichen Entnahme kann die ausgegebene Menge der Schmelze 4 jeweils genau dosiert werden, damit sich vor der Abstreif-Einrichtung 8 kein Schmelzwulst bildet, der ggf. zu vorzeitigem Erstarren oder zu Unregelmäßigkeiten führen kann.

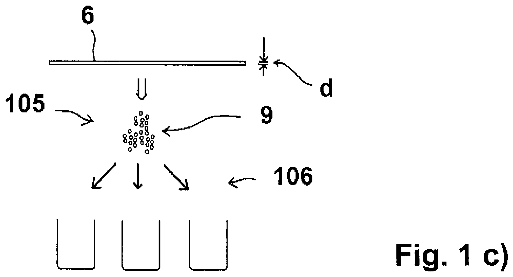

Die erstarrte dünne Schicht 6 kühlt auf dem Förderband 7 nachfolgend ab und kann an dessen Ende entnommen werden, wobei sie z. B. durch Eigenbelastung abbrechen kann, so dass sie gemäß der schematisierten Darstellung der Fig. 1c nachfolgend ggf. weiter zu Schleifkörnern 9 gemahlen und durch Sieben in unterschiedliche Schleifkorngrößen klassiert werden kann, wie es als solches bekannt ist. Da die dünne Schicht 6 bereits eine Schichtdicke d entsprechend den Schleifkörnern 9 aufweist, wird sie im wesentlichen lateral (in der Ebene) gebrochen.

Somit weist das Verfahren nach Fig. 1a) bis c) die Schritte auf:
- Schritt 101: Einbringen des festen Ausgangsgemischs 2 in den Tiegel 1 in eine bereits bestehende eutektische Schmelze 4,
- Schritt 102: Aufschmelzen und Warmhalten des eingebrachten Ausgangsgemischs 2 durch induktives Heizen,
- Schritt 103: Ausgeben der eutektischen Schmelze 4, vorzugsweise als kontinuierliches Ausgeben,
- Schritt 104: Abschrecken der eutektischen Schmelze 4 als dünne Schicht 6,
- Schritt 105: Zerbrechen/Mahlen der dünnen Schicht 6 (in lateraler Richtung) zu Schleifkörnern 9;
- Schritt 106: Klassieren der Schleifkörner 9.

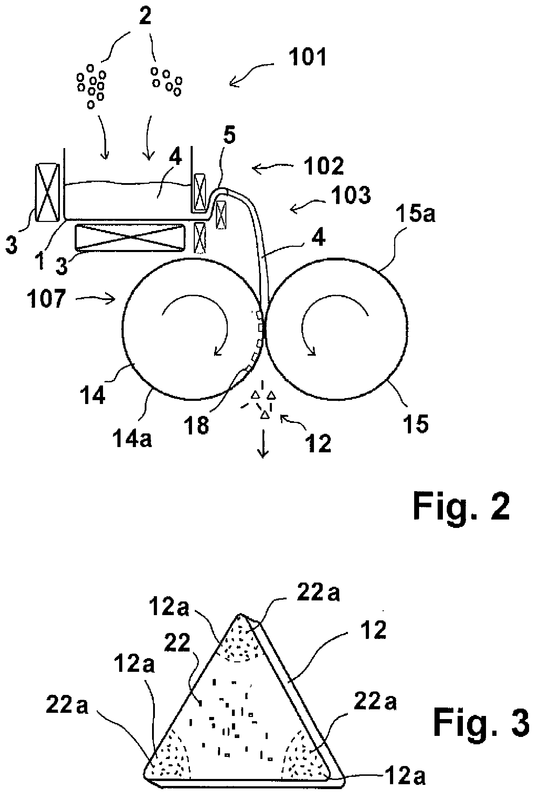

Bei der Ausführungsform der Fig. 2 kann grundsätzlich derselbe Tiegel 1 verwendet werden, aus dessen Auslass 5 wiederum kontinuierlich die eutektische Schmelze 4 entnommen wird. Diese Schmelze 4 wird jedoch nachfolgend nicht zu einer kontinuierlich dünnen Schicht, sondern direkt zu geformten Schleifkörnern 12 verarbeitet. Hierzu sind in der gezeigten Ausführungsform zwei Walzen 14 und 15 vorgesehen, die sich gegensinnig drehen und zwischen die von der Oberseite her die eutektische Schmelze 4 eingebracht wird. Da die Schmelze 4 kontinuierlich eingebracht wird, kann die Fördermenge an die Drehgeschwindigkeit der Walzen 14 und 15 derartig angepasst werden, dass ein sich oberhalb des Kontaktbereiches der Walzen 14 und 15 ausbildender Schmelzwulst 16 sehr gering bis vernachlässigbar ist; er kann erfindungsgemäß vorteilhafterweise punktförmig oder linienförmig sein. Eine Erstarrung der Schmelze 4 tritt in diesem Schmelzwulst 16 nicht auf. Somit kann auch bei diesem Verfahren eine Abschreckung der Schmelze 4 statt einer allmählichen Abkühlung mit langsamem Erstarren erreicht werden.

Die links gezeigte Walze 14 ist kälter, z. B. ungeheizt oder auch aktiv gekühlt,z. B. durch Wasserkühlung, z. B. mit einer Temperatur von kleiner 250°C, d.h. z. B. im Bereich 30 - 250°C. Auf der Oberfläche 14a der kalten Walze 14 sind Formvertiefungen 18 ausgebildet. Die rechts gezeigte Walze 15 ist hingegen geheizt und auf ihrer Oberfläche 15a glatt, d. h. ohne relevante Vertiefungen ausgebildet. Die Oberfläche 15a kann z. B. auf 1.000°, 1.200° oder 1.500°C Oberflächentemperatur geheizt sein. Hierdurch wird erreicht, dass die Schmelze 4 eines sich ausbildenden Schmelzwulstes 16 oberhalb des Kontaktbereichs zwischen den Walzen 14, 15 nicht erstarrt bzw. zu rasch abkühlt. Durch die kalte Walze 14 kann bei Aufnahme der Schmelze 4 in den Vertiefungen 18 ein schnelles Abschrecken ermöglicht werden.

Die Formvertiefungen 18 können insbesondere eine Dreiecksform ausbilden und somit gemäß Fig. 3 zur Herstellung von dreieckigen Schleifkörnern 12 dienen, deren Dreiecksform vorzugsweise gleichseitig sein kann, um eine hohe Symmetrie zu ermöglichen. Die Schleifkörner können insbesondere prismatisch (im Wesentlichen gleiche Ober- und Unterfläche) geformt sein; abweichend hiervon kann jedoch auch eine nicht- prismatische Form gewählt werden, bei der somit Ober- und Unterseite der Schleifkörner 12 unterschiedlich sind.

Die in Fig. 3 gezeigten Form-Schleifkörner 12 sind somit polykristallin und weisen eine Al₂O₃-Matrix mit ZrO₂-Einschlüssen bzw. - Segregationen 22, 22a auf.

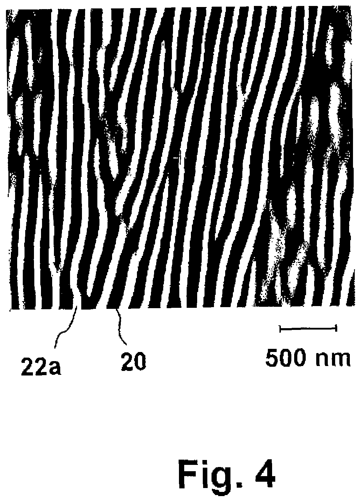

Fig. 4 zeigt eine REM (Rasterelektronenmikroskop, SEM)-Aufnahme eines derartigen, zur Präparation geschliffenen Eckbereichs 12a unter Angabe der Skalierung bzw. der Dimensionierung. Als dunkle Bereiche ist die Al₂O₃-Matrix 20 erkennbar, die ZrO₂ - Segregationen 22a sind als weiße Bereiche erkennbar. Eingezeichnet sind Skalierungen von 200 nm und 500 nm. Die ZrO₂ - Segregationen 22a erstrecken sich somit durchaus in einer oder zwei Dimensionen über größere Längen, ihre Dicke ist jedoch - zumindest überwiegend - im nm-Bereich, hier in der Schliffebene erkennbar bei etwa 40 bis 80 nm, wobei gegebenenfalls in einer anderen Ebene senkrecht zur Erstreckungsrichtung etwas kleinere Werte ermittelt werden können.

Es zeigt sich somit, dass in den in Fig. 3 gestrichelt angedeuteten Eckbereichen 12a der Dreiecksform der Schleifkörner 12 ZrO₂-Ausscheidungen 22a im nanoskaligen Bereich, d.h. mit Dickenabmessungen unterhalb 100 nm, insbesondere unterhalb 50 nm auftreten, wohingegen die ZrO₂-Ausscheidungen 22 im mittleren Bereich des Schleifkorns 12 eher größer sind. Als Dickenabmessung wird hierbei die geringste Längenabmessung der Ausscheidungen verstanden, so dass die nanoskaligen Ausscheidungen 22a sich z. B. auch länglich oder spiralartig über eine größere Distanz erstrecken können. Die ZrO₂-Ausscheidungen 22a sind hierbei kleiner bzw. kleinskaliger als die Ausscheidungen 22 im mittleren Bereich, da der Abschreckvorgang in den Eckbereichen 12a schneller erfolgt, da hier die Kühlung nicht nur von der Unterseite des Schleifkorns 12, sondern auch von den Seitenflächen der Dreiecksform erfolgt und somit das Verhältnis von kühlender Oberfläche zu Volumen noch geringer ist als im mittleren Bereich des Schleifkorns 12. Somit ist auch ein Abstand x zwischen den Ausscheidungen 22a gering, z. B. unter 250 nm, insbesondere unter 200 nm.

Die nanoskaligen ZrO2-Segregationen und die kleinen Abstände x erhöhen das Abrasivverhalten. Da diese Eckbereiche 12a bei Einsatz der Schleifkörner 12 wesentlich zur Schleifleistung beitragen, kann somit ein Schleifkorn 12 mit besseren Schleifeigenschaften geschaffen werden. Die etwas größeren ZrO₂₋Segregationen 22a im mittleren Bereich dienen der allgemeinen Bruchfestigkeit des Schleifkorns.

Die erzeugten Schleifkörner 12 können nachfolgend direkt entnommen werden.

Das erfindungsgemäße Verfahren nach Fig. 2 weist somit die Schritte auf:
- Schritt 101: Einbringen, vorzugsweise kontinuierliches Einbringen von festen Ausgangsstoffen des Ausgangsgemischs 2 in den Tiegel 1, vorzugsweise in eine bereits bestehende Schmelze 4,
- Schritt 102: Aufschmelzen des Ausgangsgemischs 2 durch induktives Heizen,
- Schritt 103: Ausgeben der eutektischen Schmelze 4, vorzugsweise als kontinuierliches Ausgeben,
- Schritt 107: Formen und hierbei Abschrecken der eutektischen Schmelze 4 als geformte Schleifkörner 12 zwischen zwei Oberflächen 14a, 15a, insbesondere von Walzen 14, 15.

## Patentansprüche

1. Verfahren zum Herstellen von polykristallinen, Zirkonia-verstärkten Alumina (Al₂O₃)- Körnern, insbesondere Schleifkörnern (9, 12), mit mindestens folgenden Schritten:
- Aufschmelzen eines festen Ausgangsgemisches (2) zu einer eutektischen Schmelze aus Alumina und Zirkonia (102),
- Auftragen der eutektischen Schmelze (4) als dünnes Schichtmaterial (6, 12) mit einer Schichtdicke (d) unter Abschreckung des dünnen Schichtmaterials (6, 12) (104, 107),
- Entnehmen des dünnen Schichtmaterials (6, 12) als Körner (12) (107) oder zur Ausbildung von Körnern (9) mit der Schichtdicke (d),
wobei die Körner (9, 12) polykristallin ausgebildet werden und eine Alumina-Matrix mit Zirkonia-Ausscheidungen (22, 22a) aufweisen,
**dadurch gekennzeichnet, dass**
die Körner (9, 12) ohne amorphe Glasphasen ausgebildet werden,
das feste Ausgangsgemisch (2) Induktiv aufgeschmolzen wird, zumindest ein Teil der Zirkonia- Ausscheidungen (22a) im nanoskaligen Bereich segregiert, und
das feste Ausgangsmaterial (2) in eine bestehende, induktiv geheizte Schmelze (4) eingegeben wird,
wobei das Ausgangsmaterial (2) ein festes Ausgangs-Gemisch (2) ist,
das Alumina (Al2O3) oder Alumina -Verbindungen sowie Zirkonia (ZrO2) oder Zirkoniaverbindungen oder jeweils deren Vorstufen enthält,
das feste Ausgangs-Gemisch (2) in einen Tiegel (1) eingegeben wird, außerhalb des Tiegels (1) eine Induktions-Heizeinrichtung (3) angeordnet ist, so dass ein Induktionsofen gebildet wird, und
wobei die eutektische Schmelze (4) aus Alumina und Zirkonia in dem Tiegel (1) aufgenommen und elektrisch leitend ist und durch die Induktions-Heizeinrichtung (3) geheizt wird,
wobei das in die Schmelze (4) eingegebene Ausgangsmaterial (2) somit vollständig induktiv aufgeschmolzen wird und die Schmelze (4) vergrößert.

2. Verfahren nach Anspruch 1, **dadurch gekennzeichnet, dass** mehr als 50% der Zirkonia- Ausscheidungen (22a) mit Durchmessern unter 100 nm segregieren.

3. Verfahren nach Anspruch 1 oder 2, **dadurch gekennzeichnet, dass** die eutektische Schmelze (4) Zusätze aufweist, z. B. stabilisierende Zusätze wie Ceroxid, Seltenerd-Oxide, Siliziumoxid.

4. Verfahren nach einem der vorherigen Ansprüche, **dadurch gekennzeichnet, dass** die eutektische Schmelze (4) kontinuierlich aus einem Auslass (5) eines Tiegels (1) entnommen wird.

5. Verfahren nach Anspruch 4, **dadurch gekennzeichnet, dass** das feste Ausgangsgemisch (2) kontinuierlich zugeführt wird und über einen als der Auslass (5) dienenden Überlauf (5) entnommen wird.

6. Verfahren nach einem der vorherigen Ansprüche, **dadurch gekennzeichnet, dass** die eutektische Schmelze (4) fortlaufend als dünne Schicht (6) auf eine bewegte Förderfläche (7) aufgetragen wird und unter Abschreckung mit der Schichtdicke (d), z. B. unter 2 mm, insbesondere kleiner 1 mm, z. B. im Bereich 0,1 - 0,8 mm erstarrt,
wobei die erstarrte dünne Schicht (6) nachfolgend zu den Schleifkörnern (9) mit der Schichtdicke (d) gebrochen und klassiert wird.

7. Verfahren nach einem der Ansprüche 1 bis 5, **dadurch gekennzeichnet, dass** aus der eutektischen Schmelze (4) direkt geformte Schleifkörner (12) ausgebildet werden.

8. Verfahren nach Anspruch 7, **dadurch gekennzeichnet, dass** die eutektische Schmelze (4) zwischen zwei gegenläufige Walzen (14, 15) aufgebracht wird,
wobei eine aktiv gekühlte Walze (14) auf ihrer Oberfläche (14a), z. B. mit Temperatur unterhalb 250 °C, Formvertiefungen (18) zur Aufnahme der eutektischen Schmelze (4) und zur Festlegung der Form der geformten Schleifkörner (12) aufweist, und die andere Walze (15) eine glatte Oberfläche (15a) aufweist und getempert ist, z. B. auf Temperaturen im Bereich von 1.000° bis 1.600°C, so dass die Oberfläche (15a) der getemperten Walze (15) wärmer als die Oberfläche (14a) der aktiv gekühlten Walze (14) ist.

9. Verfahren nach Anspruch 8, **dadurch gekennzeichnet, dass** sich oberhalb eines Kontaktbereichs der beiden Walzen (14, 15) allenfalls ein im Wesentlichen linien- oder punktförmiger Schmelzwulst (16) der aufgebrachten eutektischen Schmelze (4) bildet.

10. Verfahren nach einem der Ansprüche 7 bis 9, **dadurch gekennzeichnet, dass** die Schleifkörner (12) mit Eckbereichen (12a) ausgebildet werden, in denen die meisten Zirkonia- Ausscheidungen (22a) nanoskalig sind, vorzugsweise mit max. Dickenabmessung kleiner 100 nm.

## Claims

1. Method for producing polycrystalline, zirconia-reinforced alumina (Al₂O₃) grains, in particular abrasive grains (9, 12), having at least the following steps:
- melting a solid starting mixture (2) to form a eutectic melt consisting of alumina and zirconia (102),
- applying the eutectic melt (4) as a thin layer material (6, 12) having a layer thickness (d), the thin layer material (6, 12) being quenched (104, 107),
- removing the thin layer material (6, 12) as grains (12) (107) or for forming grains (9) having the layer thickness (d), wherein the grains (9, 12) have a polycrystalline form and have an alumina matrix with zirconia precipitations (22, 22a), **characterised in that**
the grains (9, 12) are formed without amorphous glass phases, the solid starting mixture (2) is inductively melted, at least one part of the zirconia precipitations (22a) is segregated in the nanoscale range and the solid starting material (2) is charged into an existing, inductively heated melt (4),
wherein the starting material (2) is a solid starting mixture (2) which contains alumina (Al₂O₃) or alumina compounds and zirconia (ZrO₂) or zirconia compounds or the precursors thereof respectively, the solid starting mixture (2) is charged into a crucible (1), an induction heating device (3) is arranged outside the crucible (1) so that an induction furnace is formed, and wherein the eutectic melt (4) consisting of alumina and zirconia is received in the crucible (1) and is electrically conducting and is heated by the induction heating device (3),
wherein the starting material (2) charged into the melt (4) is consequently completely inductively heated and increases the melt (4).

2. Method according to Claim 1, **characterised in that** more than 50 % of the zirconia precipitations (22a) segregate having diameters of less than 100 nm.

3. Method according to Claim 1 or 2, **characterised in that** the eutectic melt (4) has additives, e.g. stabilising additives, such as cerium oxide, rare-earth oxides and silicon oxide.

4. Method according to any one of the preceding claims, **characterised in that** the eutectic melt (4) is continuously removed from an outlet (5) of a crucible (1).

5. Method according to Claim 4, **characterised in that** the solid starting mixture (2) is continuously supplied and removed via an overflow (5) used as the outlet (5).

6. Method according to any one of the preceding claims, **characterised in that** the eutectic melt (4) is applied continuously as a thin layer (6) onto a moving conveying surface (7) and solidifies with quenching, with the layer thickness (d) being e.g. less than 2 mm, in particular less than 1 mm, e.g. in the range from 0.1 - 0.8 mm, wherein the solidified thin layer (6) is subsequently crushed to form the abrasive grains (9) having the layer thickness (d) and is classified.

7. Method according to any one of Claims 1 to 5, **characterised in that** directly shaped abrasive grains (12) are formed from the eutectic melt (4).

8. Method according to Claim 7, **characterised in that** the eutectic melt (4) is applied between two counter-rotating rollers (14, 15), wherein one actively cooled roller (14), e.g. at a temperature below 250 °C, has shaped indentations (18) on its surface (14a) for receiving the eutectic melt (4) and for setting the shape of the shaped abrasive grains (12) and the other roller (15) has a smooth surface (15a) and is temperature-controlled, e.g. at temperatures in the range from 1,000 °C to 1,600 °C, so that the surface (15a) of the temperature-controlled roller (15) is hotter than the surface (14a) of the actively cooled roller. (14).

9. Method according to Claim 8, **characterised in that** in any case an essentially linear or punctiform melt ridge (16) of the applied eutectic melt (4) forms above a contact area of the two rollers (14, 15).

10. Method according to any one of Claims 7 to 9, **characterised in that** the abrasive grains (12) are formed with corner areas (12a), in which most of the zirconia precipitations (22a) are nanoscale, preferably having a maximum thickness measurement of less than 100 nm.

## Revendications

1. Procédé de fabrication de grains d'alumine (Al₂O₃) renforcés à la zircone, notamment des grains abrasifs (9, 12) comportant au moins les étapes suivantes :
- fusion d'un mélange initial solide (2) pour obtenir une masse fondue eutectique d'alumine et de zircone (102),
- application de la masse fondue eutectique (4) comme matériau en couche mince (6, 12) d'une épaisseur de couche (d) par trempe de ce matériau en couche mine -6, 12) (104, 107),
- prélèvement du matériau en couche mince (6, 12) sous forme grains (12) (107) ou pour former des grains (9) d'une épaisseur de couche (d), les grains (9, 12) étant réalisés sous forme polycristalline et présentant une matrice d'alumine avec des dépôts de zircone (22, 22a),
**caractérisé en ce que**
les grains (9, 12) sont formés sans phase vitreuse amorphe, le mélange initial solide (2) est fondu par induction, au moins une partie des dépôts de zircone (22a) est ségrégée dans le domaine nanométrique, et
le matériau initial solide (2) est introduit dans une masse fondue (4) chauffée par induction,
le mélange initial solide (2) contenant de l'alumine (Al2O3) ou des combinaisons d'alumine, ainsi que de la zircone (ZrO2) ou des combinaisons de zircone ou respectivement des précurseurs de celles-ci,
le mélange initial solide (2) étant placé dans un creuset (1), un dispositif de chauffage par induction (3) étant disposé à l'extérieur du creuset (1), de sorte à former un four à induction, et la masse fondue eutectique (4) d'alumine et de zircone électriquement conductrice et chauffée au moyen du dispositif de chauffage par induction (3) étant reçue dans le creuset (1) et,
le matériau initial (2) introduit dans la masse fondue (4) étant intégralement fondu inductivement augmentant, ainsi, la masse fondue (4).

2. Procédé suivant la revendication 1, **caractérisé en ce que** plus de 50% des dépôts de zircone (22a) ségrègent avec des diamètres inférieurs à 100 nm.

3. Procédé suivant la revendication 1 ou 2, **caractérisé en ce que** la masse fondue eutectique (4) présente des additifs, par exemple des additifs stabilisants, tel qu'oxyde de cérium, oxydes de terre rare, silice.

4. Procédé suivant une des revendications précédentes, **caractérisé en ce que** la masse fondue eutectique (4) est prélevée continuellement à une sortie (5) du creuset (1).

5. Procédé suivant la revendication 4, **caractérisé en ce que** le mélange initial solide (2) est amené continuellement et prélevé par l'intermédiaire d'un trop-plein (5) servant de sortie (5).

6. Procédé suivant une des revendications précédentes, **caractérisé en ce que** la masse fondue eutectique (4) est appliquée continuellement sous forme d'une couche mince (6) sur une surface de transport en mouvement (7) et solidifiée en la soumettant à une trempe avec l'épaisseur de couche (d) p.ex. inférieure à 2 mm, en particulier inférieure à 1 mm, p.ex. dans la fourchette de 0,1 à 0,8 mm, la couche mince solidifiée (6) étant ensuite cassée et calibrée en grains abrasifs (9) présentant l'épaisseur de couche (d).

7. Procédé suivant une des revendications 1 à 5, **caractérisé en ce que** des grains abrasifs (12) sont formés directement à partir de la masse fondue eutectique (4).

8. Procédé suivant la revendication 7, **caractérisé en ce que** la masse fondue eutectique (4) est appliqué entre deux rouleaux (14, 15) tournant dans les sens inverses l'un par rapport à l'autre, un rouleau (14) refroidi activement présentant sur sa surface (14a) ayant une température p.ex. inférieure à 250°C, des cavités (18) destinées à recevoir la masse fondue eutectique (4) et à déterminer la forme des grains abrasifs (12) formés, et l'autre rouleau (15) présentant une surface (15a) lisse et recuite, p.ex. à des températures se situant dans une plage allant de 1000° à 1600°C, de sorte que la surface (15a) du rouleau recuit (15) et plus chaude que la surface (14a) du rouleau activement refroidi (14).

9. Procédé suivant la revendication 8, **caractérisé en ce que** tout au plus un bourrelet de masse fondue (16) essentiellement linéaire ou ponctuel de la masse fondue eutectique (4) appliquée se forme au-dessus d'une zone de contact des deux rouleaux (14, 15).

10. Procédé suivant une des revendications 7 à 9, **caractérisé en ce que** les grains abrasifs (12) sont conçus avec des zones d'angle (12a), dans lesquelles la plupart des dépôts de zircone (22a) sont formés dans le domaine nanométrique, de préférence avec une dimension d'épaisseur inférieure à 100 nm.
